# FASCICULE DE BREVET EUROPEEN

(11) **EP 3 969 306 B1**
(45) Date de publication et mention de la délivrance du brevet: **07.08.2024**
(21) Numéro de dépôt: 20725548.0
(22) Date de dépôt: 15.05.2020
(51) Int. Cl.: B60J 10/235, B60J 10/75

(54) **LÉCHEUR EXTÉRIEUR AVEC ENJOLIVEUR ÉVOLUTIF**
SCHEIBENWISCHERDICHTUNG MIT AUFRÜSTBARER ABDECKUNG
WINDOW WIPER SEALING WITH SCALABLE FAIRING

(30) Priorité: 16.05.2019 FR 1905130
(43) Date de publication de la demande: 23.03.2022
(73) Titulaire: Renault s.a.s, 92100 Boulogne Billancourt (FR)
(72) Inventeur: VOIRIN, Michel, 76520 Franqueville saint Pierre (FR); LE COEDIC, Yoann, 78120 Rambouillet (FR)
(74) Mandataire: Renault Group
(86) Numéro de dépôt international: PCT/EP2020/063579
(87) Numéro de publication internationale: WO 2020/229649

(56) Documents cités:
- EP-A2- 0 189 166
- WO-A1-2018/145810
- FR-A1- 3 005 449
- US-A1- 2003 205 918
- US-A1- 2018 162 209

## Description

L'invention concerne un lécheur de vitre, notamment un lécheur extérieur de vitre pour une porte de véhicule automobile. L'invention concerne également une porte de véhicule automobile et un véhicule automobile comprenant un tel lécheur.

Un lécheur de vitre d'une porte est un élément présent le long d'un bord d'une ouverture au niveau duquel une vitre se glisse lorsqu'on l'ouvre de manière à pénétrer dans la porte. La partie intérieure du lécheur est en contact avec la vitre et peut comprendre, par exemple, un caoutchouc lisse afin que la vitre puisse frotter au caoutchouc et puisse coulisser sans s'abimer. La partie extérieure du lécheur permet de camoufler la partie intérieure et permet de créer un raccord entre la carrosserie et la vitre. La partie extérieure du lécheur a donc un rôle important dans le design des portes de véhicules automobiles. Le lécheur permet également d'assurer une étanchéité à l'interface entre la vitre mobile et le caisson du porte.

Généralement, les lécheurs sont réalisés à partir d'une pièce extrudée. Cependant, ce type de lécheurs est contraignant car il n'est pas possible de fournir des lécheurs dont la section peut être évolutive le long du lécheur.

US 2003/205918 A1 divulgue un lécheur selon le préambule de la revendication 1.

Il existe également des lécheurs réalisés par bi-injection. Ces lécheurs permettent de faire évoluer la section le long du lécheur. Cependant, ces lécheurs sont plus long et plus difficiles à fabriquer que les lécheurs traditionnels.

On connait enfin la demande de brevet US2018/162,209 décrivant un lécheur de vitre dont la section varie long de la direction longitudinale. Cette variation de section est obtenue par une technique de moulage. Une fois encore, ce type de technique est longue à mettre en oeuvre et onéreuse. De plus, la rigidité du lécheur peut être insuffisante.

Le but de l'invention est de fournir un lécheur extérieur de vitre pour une porte de véhicule automobile remédiant aux inconvénients ci-dessus et améliorant les lécheurs connus de l'art antérieur. En particulier, l'invention permet de réaliser un lécheur dont la fabrication est simple et fiable et qui permette de faire évoluer la section et la forme du lécheur le long de sa direction longitudinale.

Selon l'invention, un lécheur, notamment lécheur extérieur de vitre mobile pour une porte de véhicule automobile, comprend :
- une première portion extrudée configurée pour appuyer contre une vitre mobile d'une porte de véhicule automobile, et
- une deuxième portion adjacente à la première portion comprenant un insert fixé à la première portion et comprenant un surmoulage recouvrant au moins partiellement ledit insert.

Le surmoulage peut présenter une section croissante ou décroissante le long de la direction longitudinale de la deuxième portion.

L'insert peut comprendre une première extrémité longitudinale configurée pour être fixée à ou insérée dans la première portion, et un corps s'étendant depuis ladite première extrémité.

Le surmoulage peut s'étendre sur toute la longueur du corps de l'insert.

La deuxième portion peut comprendre un enjoliveur extérieur recouvrant au moins une partie du surmoulage.

Le lécheur peut comprendre une cassure entre la première portion et la deuxième portion.

La première extrémité longitudinale de l'insert peut être clippée dans la première portion extrudée et/ou sur la première portion extrudée.

Selon l'invention, une porte pour véhicule automobile comprend au moins une vitre mobile et un lécheur extérieur de vitre défini précédemment.

La première portion extrudée peut être disposée à la base de l'au moins une vitre mobile.

Selon l'invention, un véhicule, notamment un véhicule automobile, comprenant une porte définie précédemment.

Selon l'invention, un procédé de réalisation d'un lécheur comprend les étapes suivantes :
- fournir une première portion extrudée ;
- fournir un insert ;
- fixer l'insert à la première portion ;
- effectuer un surmoulage recouvrant au moins partiellement l'insert.

L'invention porte encore sur un lécheur obtenu par la mise en oeuvre du procédé défini précédemment.

Les dessins annexés représentent, à titre d'exemple, un mode de réalisation d'un lécheur et d'une porte pour véhicule automobile équipé d'un lécheur selon l'invention.
[Fig. 1] La figure 1 représente un véhicule comprenant une porte de véhicule automobile équipée d'un lécheur selon un mode de réalisation de la présente invention.
[Fig. 2] La figure 2 représente un insert du mode de réalisation du lécheur.
[Fig. 3] La figure 3 représente le mode de réalisation du lécheur.
[Fig. 4] La figure 4 représente le mode de réalisation du lécheur sur lequel le surmoulage et l'enjoliveur extérieur ne sont pas représentés.
[Fig. 5] La figure 5 représente la carrosserie inférieure de la porte de véhicule comprenant les moyens d'interface pour la fixation du lécheur.
[Fig. 6] La figure 6 représente une vue en coupe, selon le plan A de la figure 1, de la porte équipée du mode de réalisation du lécheur.
[Fig. 7] La figure 7 représente une vue en coupe, selon le plan B de la figure 1, de la porte équipée du mode de réalisation du lécheur.
[Fig. 8] La figure 8 représente une vue en coupe, selon le plan C de la figure 1, de la porte équipée du mode de réalisation du lécheur.
[Fig. 9] La figure 9 représente une vue en coupe, selon le plan D de la figure 1, de la porte équipée du mode de réalisation du lécheur.

Dans la suite de la description, on entend par « intérieur », le côté le plus proche de l'intérieur de l'habitacle du véhicule sur lequel le lécheur est destiné à être monté. De la même manière, on entend par « extérieur » le côté opposé à l'intérieur de l'habitacle.

Dans la suite de la description, on entend par « inférieur », le côté le plus proche d'un plan horizontal sur lequel repose le véhicule comprenant la porte équipée du lécheur selon l'invention. De la même manière, on entend par « supérieur » le côté le plus éloignée de ce plan horizontal ou le plus haut.

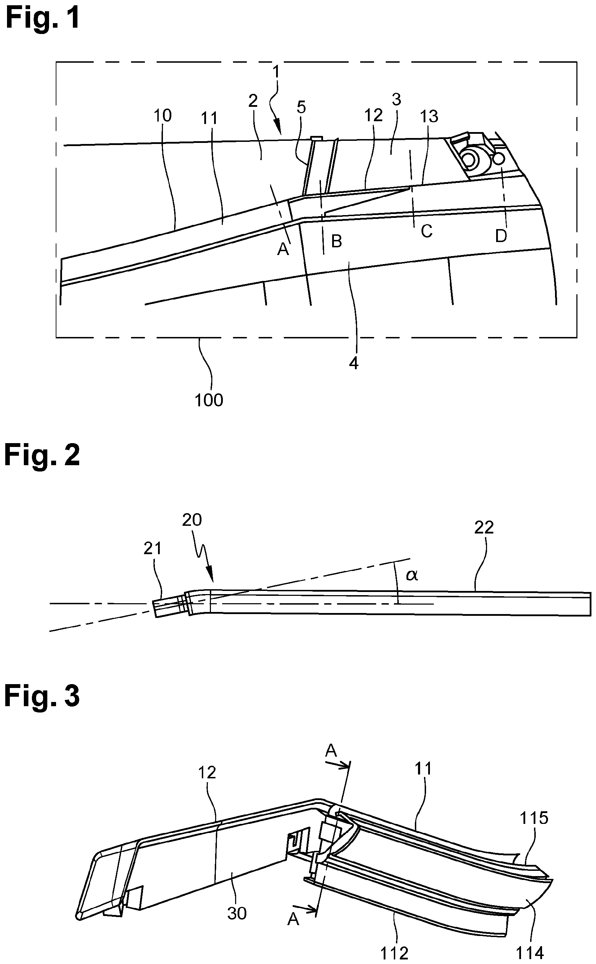

Un exemple d'un véhicule 100 équipé d'une porte 1 et/ou d'un mode de réalisation du lécheur 10 est représenté schématiquement sur la figure 1. Le véhicule 100 peut être un véhicule automobile tel une voiture ou un camion.

Un exemple d'un mode de réalisation d'un lécheur 10 selon l'invention et d'une porte 1 équipée d'un mode de réalisation d'un lécheur sont décrit ci-après en références aux figures 1 à 9.

La porte 1 de véhicule automobile est équipée d'un lécheur 10 selon un mode de réalisation de l'invention. La porte 1 de véhicule comprend une vitre mobile 2 et un joint latéral 5 de vitre. Le joint latéral 5 peut être agencé entre la vitre mobile et une vitre fixe 3 ou un panneau de carrosserie supérieur.

La porte 1 de véhicule comprend en outre un panneau de carrosserie inférieur 4 situé en dessous de la vitre mobile 2 et de la vitre fixe 3 ou du panneau de carrosserie supérieur.

Le lécheur est disposé sur le côté supérieur du panneau de carrosserie inférieur 4. Le lécheur 10 comprend une première portion 11. La première portion 11 est configurée pour lécher une vitre mobile 2 d'une porte automobile 1, c'est-à-dire que le lécheur comprend une lèvre 115 destinée à appuyer contre la vitre mobile 2 et à frotter contre celle-ci lorsque la vitre mobile 2 est déplacée.

La première portion 11 est préférentiellement réalisée par extrusion. La première potion est préférentiellement réalisée en matériau thermoplastique.

La première portion 11 comprend une section constante selon sa direction longitudinale.

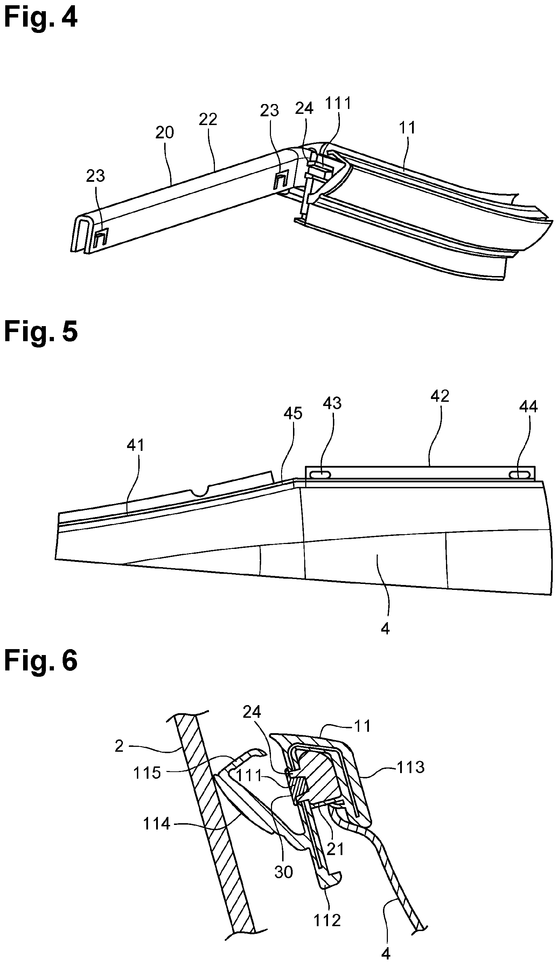

Comme illustré sur la figure 3 et la figure 6, la première portion 11 comprend un élément latéral 114 terminé par une lèvre 115 destinée à être en contact avec une vitre mobile. L'élément latéral est disposé du côté intérieur de la première portion 11. Cet élément latéral 114 lèche la vitre mobile lors de son mouvement, il permet avantageusement d'accompagner le mouvement de la vitre sans laisser de trace sur la vitre ou sans la détériorer. Il permet aussi d'assurer une étanchéité à l'interface entre la vitre mobile 2 et le caisson de porte.

Sur la figure 6, cet élément latéral 114 est représenté dans sa position libre. Lors du montage, l'élément latéral 114 est déplacé pour venir au contact de la surface extérieure de la vitre mobile 2. L'élément latéral 114 exerce alors une force constante sur la vitre mobile 2 de manière à la repousser vers l'intérieur du véhicule, assurant ainsi à la vitre mobile 2 de rester calée lors de ses mouvements d'ouverture et de fermeture.

La première portion 11 comprend en outre un élément d'accroche 112 à la carrosserie de la porte de véhicule. Cet élément d'accroche peut s'étendre parallèlement à la vitre du côté intérieur du lécheur.

Préférentiellement, cet élément d'accroche 112 permet de se fixer à la carrosserie par clippage, notamment au panneau de carrosserie 4 de la porte 1 formant la partie extérieure du panneau de la porte.

La première portion 11 s'étend sur au moins une partie de la longueur de la base de la vitre mobile de la porte.

Le lécheur 10 comprend en outre une deuxième portion 12 adjacente à la première portion 11. La deuxième portion 12 comprend un insert 20 et un surmoulage 30 recouvrant au moins partiellement l'insert. Le surmoulage peut complémentairement recouvrir aussi une partie de la première portion 11. Le surmoulage 30 peut également avoir pour fonction de créer une liaison définitive entre l'insert 20 et la première portion 11, c'est-à-dire une liaison non-démontable ou démontable par altération ou sacrifice du lécheur 10.

Comme illustré sur la figure 2, l'insert 20 comprend une première extrémité longitudinale 21. La première extrémité longitudinale 21 de l'insert 20 est conçue pour être insérée dans un creux de la première portion 11. Alternativement ou complémentairement, l'insert 20 peut être conçu pour recevoir la première extrémité 21 dans un creux de l'insert 20.

Dans un mode de réalisation illustré sur la figure 6, la première extrémité 21 de l'insert 20 et la première portion 11 comprennent des moyens de coopération permettant de fixer la première extrémité de l'insert à la première portion. Préférentiellement la première portion 11 comprend une cavité 111 et la première extrémité 21 de l'insert 20 comprend au moins une protubérance 24 conçue pour coopérer avec ladite cavité 111 de telle manière à ce qu'une fois la protubérance 24 insérée dans la cavité 111, toute translation entre l'extrémité 21 de l'insert 20 et la première portion 11 soit bloquée. Par exemple, l'insert 20 et la première extrémité longitudinale 21 font fixés par clippage.

L'insert 20 comprend en outre un corps 22 s'étendant longitudinalement à partir de la première extrémité longitudinale 21 de l'insert 20.

Préférentiellement, la direction longitudinale de la première extrémité longitudinale 21 de l'insert et celle du corps 22 de l'insert ne sont pas parallèles. Ces deux directions présentent une cassure, soit un angle α compris entre 0° et 90° et/ou supérieur à 5° ou à 10°.

Le lécheur 10 présente donc une cassure entre la première portion 11 et la deuxième portion 12. Cette cassure est causée par l'angle entre l'extrémité 21 et le corps 22 de l'insert 20. Cette cassure permet ainsi d'avoir un seul lécheur 10 à la base de deux vitres 2, 3 d'une même porte et dont les bases ne sont pas parallèles.

Par « cassure », on entend la présence d'un angle entre les axes longitudinaux de deux portions adjacentes du lécheur.

L'insert 20 est réalisé en matière rigide, comme par exemple en polypropylène ou en matière plastique rigide.

La deuxième portion 12 comprend en outre une matière de surmoulage. Cette matière est surmoulée sur l'insert, préférentiellement après que l'extrémité 21 de l'insert a été introduit dans la première portion 11.

Ainsi, l'insert 20 permet avantageusement de faire la jonction entre la première portion extrudée 11 et le surmoulage 30. L'insert 20 permet également d'améliorer la rigidité du lécheur 10 et de réduire le risque de casse lors du montage.

Le surmoulage 30 est préférentiellement réalisé en thermoplastique ou en matière plastique souple.

Le surmoulage 30 s'étend préférentiellement depuis la première portion 11 jusqu'à la deuxième extrémité longitudinale de la deuxième portion 12.

La section du surmoulage 30 peut présenter une section évolutive le long de sa direction longitudinale. La section peut être croissante ou décroissante depuis la liaison avec la première portion 11 vers la deuxième extrémité de l'insert 20.

La section du surmoulage 30 au niveau de la jonction avec la première portion 11 est sensiblement la même que la section de la première portion 11.

Dans un mode de réalisation, le surmoulage 30 recouvre en partie la première portion extrudée 11 du lécheur 10 de manière à former une surface plane avec la partie extérieure de la première portion 11. Le surmoulage 30 s'arrête à fleur de la première portion 11.

Le surmoulage 12 peut également remplir la cavité 111 de la première portion extrudée comme illustré sur la figure 6. Ainsi, la protubérance 24 de l'insert 20 est maintenue plus robustement dans la cavité 111 et la liaison entre la première portion 11 et la deuxième portion 12 est renforcée.

La deuxième portion 12 peut comprendre en outre un enjoliveur extérieur 13. L'enjoliveur extérieur 13 est fixé sur le surmoulage 30. L'enjoliveur extérieur 13 recouvre en partie le surmoulage 30.

L'enjoliveur 13 est préférentiellement en acier inoxydable.

Dans un mode de réalisation non-représenté, l'enjoliveur extérieur 13 peut recouvrir en partie ou en totalité la première portion 11 et la deuxième portion 12.

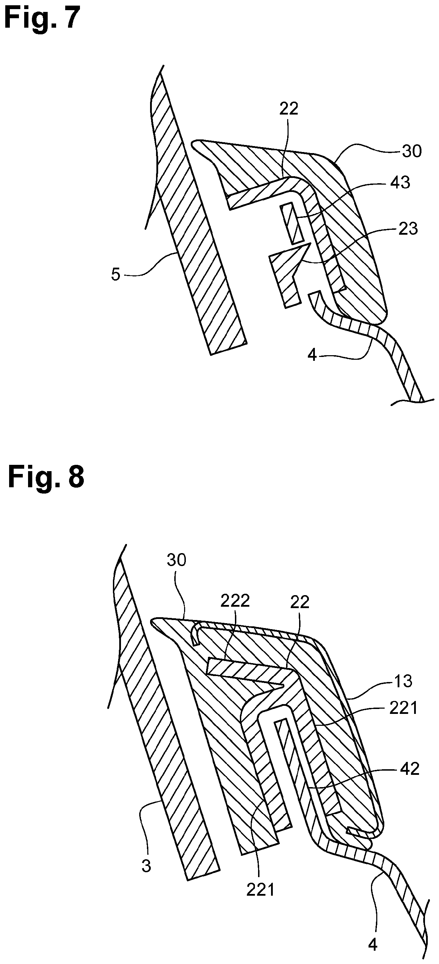

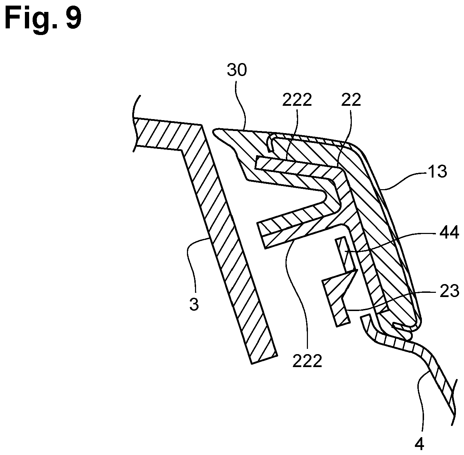

Comme illustré sur les figures 8 et 9, l'enjoliveur extérieur 13 peut être fixé au surmoulage 30 par une portion repliée s'enfonçant dans le surmoulage 30. L'enjoliveur 13 peut être surmoulé directement avec la première portion 11 et l'insert 20. Ainsi, l'enjoliveur 13 peut être fixé au reste du lécheur 10 lors de l'étape de surmoulage. Dans un mode de réalisation alternatif non-représenté, l'enjoliveur extérieur 13 est fixé à l'insert 2. L'enjoliveur extérieur 13 comprend alors une patte transversale s'introduisant à travers un alésage de l'insert 20.

La première portion 11 est disposée au contact de la vitre mobile. La deuxième portion 12 est disposée entre la vitre fixe 3 ou le panneau de carrosserie supérieur et le panneau de carrosserie inférieur 4.

Le panneau de carrosserie inférieur 4 est représenté sur la figure 5. Le panneau de carrosserie inférieur 4 comprend une première interface 41 et une deuxième interface 42.

Chaque interface comprend une surface s'étendant vers le côté supérieur. L'épaisseur de cette interface est celle de la tôle constituant le panneau ou sensiblement l'épaisseur de ladite tôle.

La première interface 41 est agencée pour recevoir la première portion 11 du lécheur 10. La deuxième interface 42 est agencée pour recevoir l'insert 20 ou le corps 22 de l'insert 20 du lécheur 10.

Le panneau de carrosserie inférieur 4 comprend une encoche 45 entre les deux interfaces 41, 42. L'encoche 45 est un espace libre entre les deux interfaces permettant le passage de l'extrémité 21 de l'insert 20.

La deuxième interface 42 comprend au moins une boutonnière 43, 44, préférentiellement deux boutonnières. La deuxième interface 42 peut comprendre une première boutonnière 43 à l'extrémité longitudinale de la deuxième interface 42 la plus proche de l'encoche et une deuxième boutonnière 44 à l'extrémité longitudinale de la deuxième interface 42 la plus éloignée de l'encoche. La boutonnière comprend un alésage ou une cavité traversante à travers la deuxième interface.

L'agencement entre les interfaces 41, 42 de la porte 1 et le lécheur 10 sera mieux expliqué ci-après en référence aux figures 6 à 9. Les figures 6, 7, 8 et 9 représentent des vues en coupe de la porte automobile selon respectivement les plans A, B, C et D représentés sur la figure 1.

La figure 6 représente une vue en coupe du lécheur 10 au niveau de l'encoche 45 du panneau de carrosserie inférieur 4. Le panneau de carrosserie inférieur 4 permet alors le passage de la première extrémité longitudinale 21 de l'insert 20 dans la première portion 11.

La figure 7 représente une vue en coupe du lécheur 10 sur une porte de véhicule automobile au niveau de la première boutonnière 43 du panneau de carrosserie inférieur 4.

L'insert 20 comprend un moyen de clippage 23 conçu pour coopérer avec la première boutonnière 43 de la deuxième interface 42 du panneau de carrosserie inférieur 4.

La figure 8 représente une vue en coupe du lécheur 10 sur une porte 1 de véhicule automobile entre les deux boutonnières 43, 44.

L'insert 20 comprend à ce niveau deux bras 221 s'étendant de part et d'autre de la deuxième interface 42 permettant ainsi d'assurer la fixation du lécheur 10 au panneau de carrosserie inférieur 4 entre les deux boutonnières 43, 44. L'insert 20 comprend en outre un bras transversal 222 permettant de rigidifier le surmoulage 30 à proximité de la vitre fixe 3 ou du panneau de carrosserie supérieur.

La figure 9 représente une vue de coupe du lécheur 10 sur une porte 1 de véhicule automobile au niveau de la deuxième boutonnière 44.

L'insert 20 comprend, comme au niveau de la première boutonnière 43, un moyen de clippage 23 pour coopérer avec la deuxième boutonnière 44 et assurer la fixation de la deuxième portion 12 à la deuxième interface 42 du panneau de carrosserie inférieur 4.

À ce niveau, l'insert 20 comprend deux bras transversaux 222 pour permettre d'augmenter la section de la deuxième portion 12 sans utiliser une quantité trop importante de surmoulage et permettre de rigidifier la deuxième portion 12.

Cette structure de l'insert 20 permet avantageusement d'augmenter la section de la deuxième portion 12 et la section du surmoulage sans diminuer la rigidité du lécheur 10.

L'invention concerne également un véhicule automobile comprenant une porte latérale ou une porte de coffre comprenant un tel lécheur.

L'invention concerne également un procédé de réalisation d'un lécheur, notamment d'un lécheur 10 tel que décrit ci-avant.

Un mode d'exécution du procédé de réalisation comprend une étape de fourniture d'une première portion extrudée 11 et une étape de fourniture d'un insert 20. Préférentiellement, la première portion extrudée 11 et/ou l'insert 20 sont tels que décrits ci-avant.

Le procédé comprend également une étape de fixation de l'insert 20 à la première portion 11. La fixation peut être réalisée par collage, soudage. Préférentiellement, la fixation est réalisée par clippage, l'insert 20 et la première portion 11. L'insert 20 et la première portion comprennent des forment complémentaires de manière à pouvoir s'insérer l'un dans l'autre afin d'améliorer la fixation.

Le procédé comprend encore une étape de surmoulage recouvrant au moins partiellement l'insert 20. Préférentiellement, le surmoulage 30 recouvre la totalité de la surface extérieure de l'insert 20. Dans un mode de réalisation, le surmoulage recouvre également au moins en partie la première portion 11.

Dans un mode de réalisation, le procédé comprend en outre la fourniture d'un enjoliveur extérieur 13. Préférentiellement, l'enjoliveur extérieur 13 est fixé au reste du lécheur 10 lors de l'étape de surmoulage. Alternativement, l'enjoliveur peut être fixé au reste du lécheur 10, notamment au surmoulage, par clippage.

L'invention concerne également un lécheur obtenu par le procédé de réalisation tel que décrit ci-avant.

## Revendications

1. Lécheur (10), notamment lécheur extérieur de vitre mobile pour une porte (1) de véhicule automobile, comprenant :
- une première portion (11) extrudée configurée pour appuyer contre une vitre mobile (1) d'une porte (1) de véhicule automobile, et
- une deuxième portion (12) adjacente à la première portion (11) comprenant un insert (20) fixé à la première portion (11) et comprenant un surmoulage (30) recouvrant au moins partiellement ledit insert (20),
**caractérisé en ce que** le surmoulage (30) présente une section croissante ou décroissante le long de la direction longitudinale de la deuxième portion (12).

2. Lécheur (10) selon la revendication 1, dans lequel l'insert (20) comprend une première extrémité longitudinale (21) configurée pour être fixée à ou insérée dans la première portion (11), et un corps (22) s'étendant depuis ladite première extrémité (21).

3. Lécheur (10) selon la revendication précédente, dans lequel le surmoulage (30) s'étend sur toute la longueur du corps (22) de l'insert (20).

4. Lécheur (10) selon la revendication 2 ou 3, dans lequel la première extrémité longitudinale (21) de l'insert (20) est clippée dans la première portion extrudée (11) et/ou sur la première portion extrudée (11).

5. Lécheur (10) selon l'une des revendications précédentes, dans lequel la deuxième portion (12) comprend un enjoliveur extérieur (13) recouvrant au moins une partie du surmoulage (30).

6. Lécheur (10) selon l'une des revendications précédentes, dans lequel le lécheur (10) comprend une cassure entre la première portion (11) et la deuxième portion (12).

7. Porte (1) pour véhicule automobile comprenant au moins une vitre mobile (2) et un lécheur extérieur (10) de vitre selon l'une des revendications précédentes.

8. Porte (1) selon la revendication précédente dans laquelle la première portion extrudée (11) est disposée à la base de l'au moins une vitre mobile (2).

9. Véhicule (100), notamment véhicule automobile, comprenant une porte (1) selon la revendication 7 ou la revendication 8.

10. Procédé de réalisation d'un lécheur selon l'une des revendications 1 à 6 comprenant les étapes suivantes :
- fournir une première portion (11) extrudée ;
- fournir un insert (20) ;
- fixer l'insert (20) à la première portion (11) ;
- effectuer un surmoulage recouvrant au moins partiellement l'insert (20).

## Patentansprüche

1. Abstreifleiste (10), insbesondere äußere Abstreifleiste einer beweglichen Scheibe einer Tür (1) eines Kraftfahrzeugs, beinhaltend:
- einen ersten extrudierten Abschnitt (11), der dazu konfiguriert ist, gegen eine bewegliche Scheibe (1) einer Tür (1) eines Kraftfahrzeugs zu drücken, und
- einen zweiten Abschnitt (12), der an den ersten Abschnitt (11) angrenzt und einen Einsatz (20) beinhaltet, der an dem ersten Abschnitt (11) befestigt ist, und eine Umspritzung (30) beinhaltet, die den Einsatz (20) mindestens teilweise abdeckt,
**dadurch gekennzeichnet, dass** die Umspritzung (30) einen zunehmenden oder abnehmenden Querschnitt entlang der Längsrichtung des zweiten Abschnitts (12) aufweist.

2. Abstreifleiste (10) nach Anspruch 1, wobei der Einsatz (20) ein erstes Längsende (21), das dazu konfiguriert ist, an dem ersten Abschnitt (11) befestigt oder in diesen eingefügt zu sein, und einen Körper (22), der sich von dem ersten Ende (21) erstreckt, beinhaltet.

3. Abstreifleiste (10) nach dem vorhergehenden Anspruch, wobei sich die Umspritzung (30) über die gesamte Länge des Körpers (22) des Einsatzes (20) erstreckt.

4. Abstreifleiste (10) nach Anspruch 2 oder 3, wobei das erste Längsende (21) des Einsatzes (20) in den ersten extrudierten Abschnitt (11) ein- und/oder auf den ersten extrudierten Abschnitt (11) aufgeclipst ist.

5. Abstreifleiste (10) nach einem der vorhergehenden Ansprüche, wobei der zweite Abschnitt (12) eine Außenabdeckung (13) beinhaltet, die mindestens einen Teil der Umspritzung (30) abdeckt.

6. Abstreifleiste (10) nach einem der vorhergehenden Ansprüche, wobei die Abstreifleiste (10) einen Knick zwischen dem ersten Abschnitt (11) und dem zweiten Abschnitt (12) beinhaltet.

7. Tür (1) für ein Kraftfahrzeug, beinhaltend mindestens eine bewegliche Scheibe (2) und eine äußere Abstreifleiste (10) einer Scheibe nach einem der vorhergehenden Ansprüche.

8. Tür (1) nach dem vorhergehenden Anspruch, wobei der erste extrudierte Abschnitt (11) an der Basis der mindestens einen beweglichen Scheibe (2) angeordnet ist.

9. Fahrzeug (100), insbesondere ein Kraftfahrzeug, das eine Tür (1) nach Anspruch 7 oder Anspruch 8 beinhaltet.

10. Verfahren zur Herstellung einer Abstreifleiste nach einem der Ansprüche 1 bis 6, beinhaltend die folgenden Schritte:
- Bereitstellen eines ersten extrudierten Abschnitts (11) ,
- Bereitstellen eines Einsatzes (20);
- Befestigen des Einsatzes (20) an dem ersten Abschnitt (11);
- Anbringen einer Umspritzung, die den Einsatz (20) mindestens teilweise abdeckt.

## Claims

1. Sealing strip (10), in particular an exterior movable window sealing strip for a door (1) of a motor vehicle, comprising:
- a first extruded portion (11), which is configured to press against a movable window (1) of a door (1) of a motor vehicle, and
- a second portion (12), which is adjacent to the first portion (11), comprises an insert (20) fixed to the first portion (11) and comprises an overmoulding (30) at least partially covering said insert (20), **characterized in that** the overmoulding (30) has a cross section that increases or decreases along the longitudinal direction of the second portion (12).

2. Sealing strip (10) according to Claim 1, wherein the insert (20) comprises a first longitudinal end (21), which is configured to be fixed to or inserted into the first portion (11), and a body (22) extending from said first end (21).

3. Sealing strip (10) according to the preceding claim, wherein the overmoulding (30) extends over the entire length of the body (22) of the insert (20).

4. Sealing strip (10) according to Claim 2 or 3, wherein the first longitudinal end (21) of the insert (20) is clipped into the first extruded portion (11) and/or onto the first extruded portion (11).

5. Sealing strip (10) according to one of the preceding claims, wherein the second portion (12) comprises an exterior trim (13) covering at least one part of the overmoulding (30).

6. Sealing strip (10) according to one of the preceding claims, wherein the sealing strip (10) comprises a break between the first portion (11) and the second portion (12) .

7. Door (1) for a motor vehicle comprising at least one movable window (2) and an exterior window sealing strip (10) according to one of the preceding claims.

8. Door (1) according to the preceding claim, wherein the first extruded portion (11) is arranged at the base of the at least one movable window (2).

9. Vehicle (100), in particular a motor vehicle, comprising a door (1) according to Claim 7 or Claim 8.

10. Method for producing a sealing strip according to one of Claims 1 to 6, comprising the following steps:
- providing a first extruded portion (11);
- providing an insert (20);
- fixing the insert (20) to the first portion (11);
- carrying out an overmoulding at least partially covering the insert (20).
